# EUROPÄISCHE PATENTSCHRIFT

(11) **EP 1 897 758 B1**
(45) Veröffentlichungstag und Bekanntmachung des Hinweises auf die Patenterteilung: **26.11.2008**
(21) Anmeldenummer: 07115702.8
(22) Anmeldetag: 05.09.2007
(51) Int. Cl.: B60R 13/10

(54) **Kennzeichenhalter**
Licence plate holder
Support de plaque d'immatriculation

(30) Priorität: 05.09.2006 DE 202006013745 U
(43) Veröffentlichungstag der Anmeldung: 12.03.2008
(73) Patentinhaber: ASPÖCK Systems GmbH, 4722 Peuerbach (AT)
(72) Erfinder: Steiner, Erwin, 4722 Peuerbach (AT); Ahamer, Wolfgang, 4092 Esternberg (AT)
(74) Vertreter: Gustorf, Gerhard

(56) Entgegenhaltungen:
- EP-A- 1 380 470
- DE-U1- 9 113 861
- DE-U1- 20 017 606
- DE-U1- 20 208 688
- DE-U1- 20 317 551
- US-A- 1 757 587

## Beschreibung

Die vorliegende Erfindung betrifft einen Kennzeichenhalter nach dem Oberbegriff des Anspruchs 1, der ausgeht von EP-A 1 380 470.

### Stand der Technik

Kennzeichenhalter werden verwendet, um meist gesetzlich vorgeschriebene Kennzeichenschilder von definierten Größen an Kraftfahrzeugen, Anhängern und Ähnlichem zu befestigen.

Diese Kennzeichenhalter müssen zum einen das Kennzeichen sicher halten und einen gewissen Schutz gegen unbefugtes Entfernen sicherstellen, zum anderen müssen die Kennzeichenschilder aber auch gewechselt werden können, beispielsweise bei Ab- oder Ummeldung eines Fahrzeuges, bei Tageszulassungen, beim Einsatz von vorläufigen Kennzeichen oder bei Wechselkennzeichen.

Bekannte Kennzeichenhalter bestehen daher in der Regel aus einem Grundträger, welcher fest am Fahrzeug montiert wird, beispielsweise mittels Schrauben an dafür vorgesehenen Öffnungen am Fahrzeug. Auf diesem Grundträger ist dann eine Halterung für das Kennzeichen befestigt, welche einfach geschlossen und meist mittels eines speziellen Werkzeuges wieder geöffnet werden kann.

Solche Kennzeichenhalter sind beispielsweise aus DE 200 17 606 U1 oder DE 101 20 139 A1 bekannt.

Nun gibt es in Deutschland für Motorräder zweizeilige Kennzeichen in unterschiedlichen zulässigen Breiten von 254, 282 und 340 mm. Hierfür ist aus DE 202 08 688 U1 ein Kennzeichenhalter bekannt, bei dem mindestens eine der zwei seitlichen Randhalterungen in kleinen Schritten rastend verstellbar ist. Damit ist eine Verwendung dieses Halters für verschieden breite Kennzeichen möglich.

Die genannten Kennzeichenhalter sind ausschließlich gedacht für Kraftfahrzeuge wie beispielsweise Personenkraftwagen und Motorräder, an welchen die vorgeschriebene Kennzeichenbeleuchtung bereits fest angebracht ist.

Insbesondere bei Lastkraftwagen, Aufliegern und Anhängern werden auch Kennzeichenhalter mit integrierter Kennzeichenbeleuchtung verwendet. Beispielsweise ist ein aus GB 2 313 227 A bekannter Kennzeichenhalter auch in einer Ausführung mit Kennzeichenbeleuchtung erhältlich. Hier wird jedoch die Kennzeichenbeleuchtung als eigenständiges Bauteil lediglich über einen zusätzlichen Befestigungshalter am Kennzeichenhalter montiert und ist nicht vollständig integriert.

Alle bekannten Kennzeichenhalter sind nun weder universell für verschiedene Kennzeichengrößen verwendbar noch erlauben sie die Integration einer Kennzeichenbeleuchtung in den Halter. Keine der bekannten Ausführungen erlaubt es außerdem, optional eine dritte Bremsleuchte im Halter zu integrieren.

Eine Ausführung, die universell für die meisten innerhalb der EU erlaubten und verwendeten Kennzeichengrößen geeignet ist, ist auch noch nicht bekannt.

### Aufgabenstellung

Der vorliegenden Erfindung liegt daher die Aufgabe zugrunde, einen Kennzeichenhalter mit den Vorteilen bekannter Ausführungen bereitzustellen, welcher zudem universell für verschiedenste Fahrzeuge, insbesondere Personenkraftwagen, Zugmaschinen und Anhänger, geeignet und außerdem für die meisten in der EU gebräuchlichen Kennzeichengrößen verwendbar ist und schließlich die Integration einer Kennzeichenbeleuchtung und optional auch einer Bremsleuchte erlaubt.

Derzeit in der EU gebräuchliche Kennzeichen sind in der Regel 110 oder 120mm hoch sowie 442, 480, 490, 500 oder 520mm breit. Die Gesamthöhe eines Kennzeichenhalters für solche Kennzeichen darf dabei ein Maß von 170mm nicht überschreiten, damit der Halter an gängigen Stoßstangen von Anhängern und Aufliegern befestigt werden kann.

Diese Aufgabe wird erfindungsgemäß durch eine Vorrichtung mit den Merkmalen des Anspruchs 1 gelöst.

### Ausführungsbeispiel

Weitere Einzelheiten, Merkmale und Vorteile ergeben sich aus der folgenden Beschreibung eines in der Zeichnung dargestellten Ausführungsbeispiels eines Kennzeichenhalters sowie aus den anschließenden Ansprüchen.

Es zeigen:
Fig. 1 eine perspektivische Ansicht eines Kennzeichenhalters mit befestigtem Kennzeichen von schräg links unten,
Fig. 2 eine perspektivische Ansicht des Kennzeichenhalters ohne ein darin befestigtes Kennzeichen von schräg rechts unten,
Fig. 3 eine Ansicht der Vorderseite des Kennzeichenhalters,
Fig. 4 eine Ansicht der Rückseite des Kennzeichenhalters,
Fig. 5 eine Ansicht des Kennzeichenhalters von unten,
Fig. 6 eine Seitenansicht des Kennzeichenhalters von links und
Fig. 7 eine perspektivische Ansicht eines Details des Kennzeichenhalters.

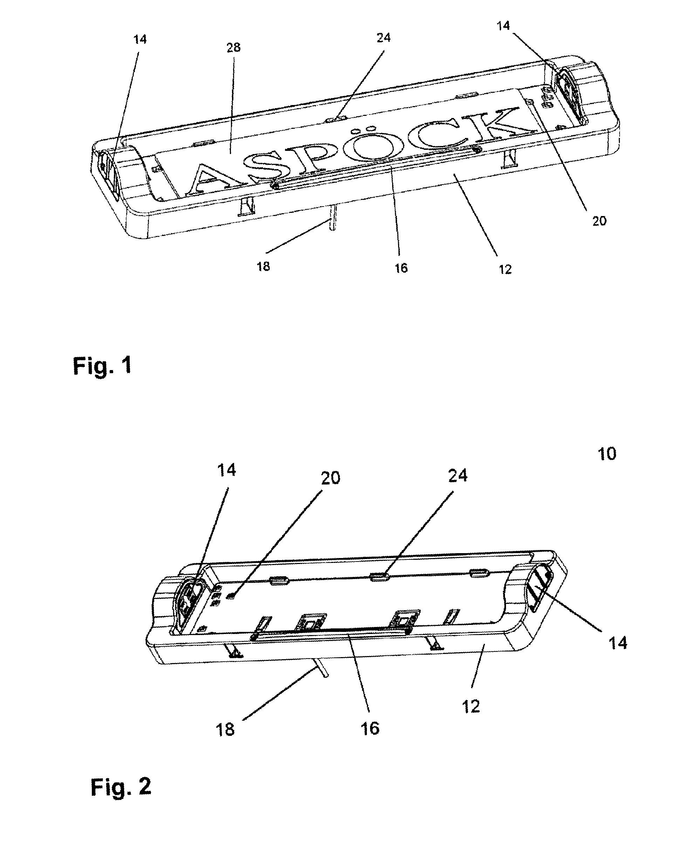

Die Figuren 1 bis 5 zeigen einen Kennzeichenhalter 10, bestehend aus einem Gehäuse 12, einer oder zwei Kennzeichenbeleuchtungen 14, einer optionalen Bremsleuchte 16 sowie einem Kabel 18 für die Stromzuführung aus verschiedenen Blickwinkeln.

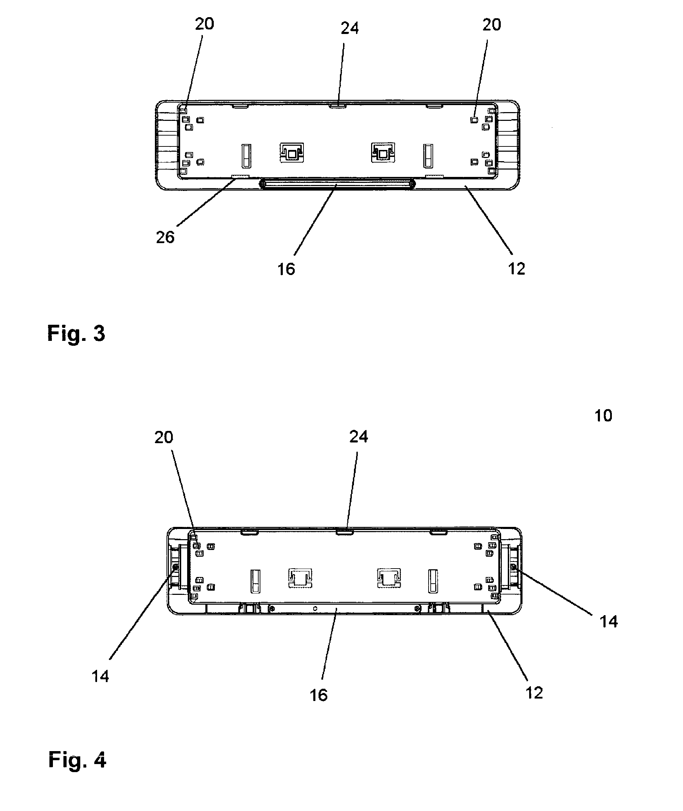

Das Gehäuse 12 verfügt dabei über zumindest zwei Halterungen 26 (vgl. Figur 3) zur Aufnahme des unteren Randes eines als Schild ausgebildeten Kennzeichens 28. In diese Halterungen 26, die hier als feste Nasen ausgebildet sind, wird der untere Rand des Kennzeichens 28 eingelegt, und anschließend werden die linken und rechten Seitenränder des Kennzeichens 28 in die für die entsprechende Kennzeichenbreite passenden seitlichen Halterungen 20 eingedrückt, welche dann das Kennzeichen 28 sicher im Gehäuse 12 halten. Schließlich wird das Kennzeichen 28 am oberen Rand mit Hilfe von hier drei Halterungen 24 endgültig fixiert. Die Halterungen 24 sind im Ausführungsbeispiel als Schieber ausgebildet, die im Gehäuse 12 vertikal beweglich geführt sind, so daß sie in ihrer Haltestellung das Kennzeichen 28 am oberen Rand übergreifen. Dabei werden auch schmalere Kennzeichen 28 sicher in ihrem Sitz im Gehäuse 12 fixiert.

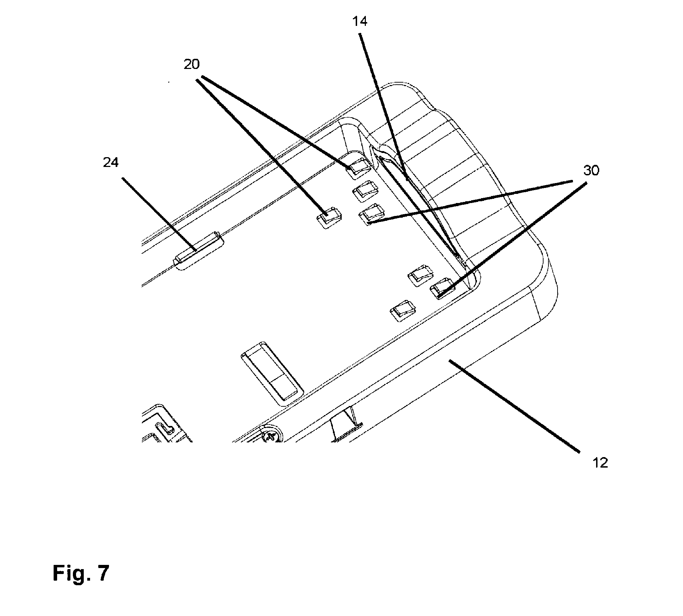

Wie vor allem die Figuren 1 und 7 zeigen, sind im Ausführungsbeispiel die seitlichen Halterungen 20 als Nasen aus Kunststoff ausgeführt, welche bei der Herstellung, beispielsweise im Spritzgußverfahren, durch Schrägstellung des Kunststoffmaterials des Gehäuses 12 mittels eines geeigneten Werkzeugs erzeugt werden. An den vorspringenden Nasen, die für die seitliche Fixierung des Kennzeichens 28 in Abhängigkeit von dessen Breite als Anschlag dienen, liegen die beiden Seitenränder dieses Kennzeichens 28 an.

Die Nasen sind dabei so gestaltet, dass Nasen, welche bei Kennzeichen 28 von nicht minimaler Breite unter dem Kennzeichen 28 zu liegen kommen, durch das Kennzeichen 28 in je eine dafür vorgesehene Ausnehmung 30 im Gehäuse 12 gedrückt werden.

Wie bereits erwähnt, sind auch die oberen Halterungen 24 und die unteren Halterungen 26 vorzugsweise so ausgeführt, dass Kennzeichen 28 mit den verschiedenen gebräuchlichen Höhen sicher und ohne beim Fahren Geräusche zu verursachen gehalten werden. Dazu sind sowohl die oberen Halterungen 24 als auch die unteren Halterungen 26 bevorzugt mehrfach vorgesehen.

Die einfach oder doppelt ausgeführte Kennzeichenbeleuchtung 14 ist über ein gemeinsames Kabel 18 mit dem Bordnetz des Kraftfahrzeuges bzw. Zugfahrzeuges verbunden. Ebenso kann die optionale Bremsleuchte 16, die rasch und einfach in eine vorhandene Ausnehmung des Gehäuses 12 eingebaut werden kann, über das gemeinsame Kabel 18 oder ein separates Kabel an das Bordnetz angeschlossen werden. Dies ist im Vergleich zu bisher bekannten Ausführungen mit je einem Kabel für jede Kennzeichenbeleuchtung sowie für die getrennt davon montierte optionale Bremsleuchte vorteilhaft hinsichtlich Material- und Montagekosten.

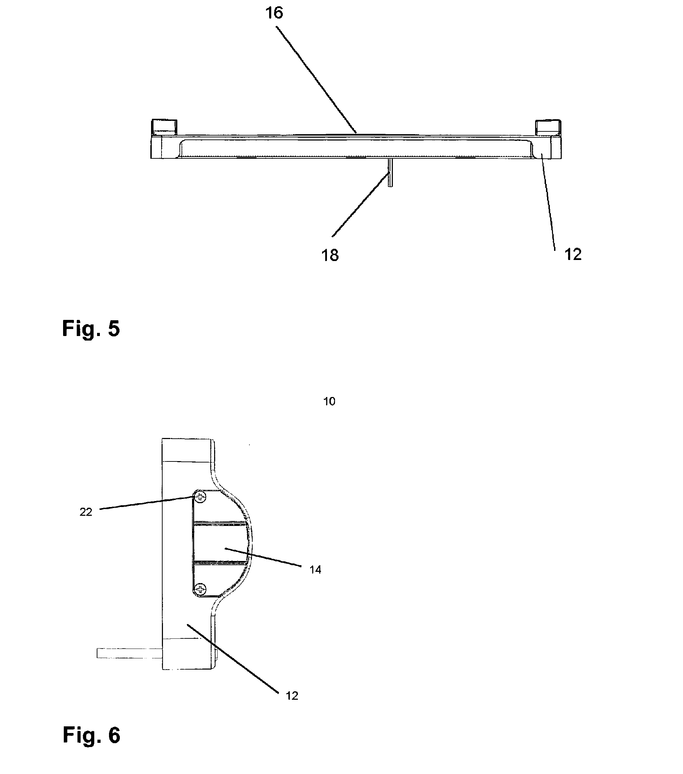

Figur 6 zeigt, wie die Kennzeichenbeleuchtung 14 über Verbindungsmittel 22 einfach und schnell in einer dafür vorgesehene Aussparung im Gehäuse 12 integriert wird. Die Verbindungsmittel 22 sind im Ausführungsbeispiel als Schrauben ausgeführt.

Figur 7 zeigt im Detail die verschiebbaren Halterungen 24 für die Aufnahme des oberen Kennzeichenrandes sowie die für jede Kennzeichenbreite am linken und rechten Kennzeichenrand jeweils bevorzugt mehrfach, im Ausführungsbeispiel zweifach, ausgeführten Halterungen 20 mit Ausnehmungen 30, in welche die Nasen der Halterungen 20 durch breite Kennzeichen 28 gedrückt werden.

## Patentansprüche

1. Kennzeichenhalter mit einem an einem Fahrzeug zu befestigenden Gehäuse (12) zur Aufnahme eines Kennzeichens (28), wobei das Gehäuse (12) eine oder mehrere untere Halterungen (26) und/oder eine oder mehrere obere Halterungen (24) zur bevorzugt beidseitigen, also oberen und unteren Aufnahme von Kennzeichen (28) verschiedener Höhen hat, **dadurch gekennzeichnet, dass** das Gehäuse (12) zumindest zwei Halterungen (20) zur seitlichen Aufnahme von Kennzeichen (28) verschiedener Breiten aufweist.

2. Kennzeichenhalter nach Anspruch 1, **dadurch gekennzeichnet, dass** die Halterungen (20) für die seitliche Aufnahme des Kennzeichens (28) als vorspringende Nasen ausgebildet sind, welche vorzugsweise wie das gesamte Gehäuse (12) aus Kunststoff bestehen und durch Schrägstellung mittels Werkzeug erzeugt werden.

3. Kennzeichenhalter nach Anspruch 2, **dadurch gekennzeichnet, dass** jede Nase der seitlichen Halterungen (20) in Schrägstellung über eine Ausnehmung (30) im Gehäuse (12) vorsteht.

4. Kennzeichenhalter nach Anspruch 3, **dadurch gekennzeichnet, dass** diejenigen Halterungen (20), welche für schmalere Kennzeichen (28) vorgesehen sind und bei Anbringung eines breiteren Kennzeichens (28) unter diesem zu liegen kommen, durch das Kennzeichen (28) in die zugehörigen Ausnehmungen (30) im Gehäuse (12) gedrückt werden.

5. Kennzeichenhalter nach einem der vorhergehenden Ansprüche, **dadurch gekennzeichnet, dass** die Halterungen (20) für die seitliche Aufnahme von Kennzeichen (28) so vielfach vorhanden sind, dass Kennzeichen (28) verschiedener Breiten sowohl links als auch rechts mehrfach gehalten werden, vorzugsweise je zweifach.

6. Kennzeichenhalter nach einem der vorhergehenden Ansprüche, **dadurch gekennzeichnet, dass** die oberen Halterungen (24) und/oder die unteren Halterungen (26) beweglich oder verstellbar ausgeführt sind, um die Aufnahme von Kennzeichen (28) verschiedener Höhe zu ermöglichen.

7. Kennzeichenhalter nach Anspruch 6, **dadurch gekennzeichnet, dass** die oberen Halterungen (24) beweglich ausgeführt sind, beispielsweise als Schieber, welche im Gehäuse (12) verstellbar geführt sind.

8. Kennzeichenhalter nach Anspruch 6 oder 7, **dadurch gekennzeichnet, dass** die unteren Halterungen (26) fest ausgeführt sind, beispielsweise als Nasen.

9. Kennzeichenhalter nach einem der vorhergehenden Ansprüche, **dadurch gekennzeichnet, dass** ein oder mehrere, vorzugsweise zwei Kennzeichenbeleuchtungen (14) bevorzugt über vorhandene Aussparungen im Gehäuse (12) integriert sind.

10. Kennzeichenhalter nach Anspruch 9, **dadurch gekennzeichnet, dass** die Kennzeichenbeleuchtungen (14) als LED-Leuchten ausgeführt sind.

11. Kennzeichenhalter nach einem der vorhergehenden Ansprüche, **dadurch gekennzeichnet, dass** optional eine Bremsleuchte (16) bevorzugt über eine vorhandene Ausnehmung in das Gehäuse (12) integriert ist.

12. Kennzeichenhalter nach einem der Ansprüche 9 bis 11, **dadurch gekennzeichnet, dass** in allen Ausführungen nur ein Kabel (18) für die Versorgung aller Leuchten erforderlich ist.

## Claims

1. Licence plate holder comprising a support frame (12) to be fastened to a vehicle and adapted to retain the licence plate (28), said support frame (12) being provided with one or more lower holding members (26) and/or one or more upper holding members (24) for licence plates (28) of different heights, preferably on both edges, i.e. on the upper and on the lower edge, **characterized in that** said support frame (12) is provided with at least two holding members (20) adapted to laterally retain licence plates (28) of different widths.

2. Licence plate holder according to claim 1, wherein the holding members (20) for laterally retaining the licence plate (28) are made up of projecting lugs preferably consisting, like the whole support frame (12), of synthetic material and generated through an inclining operation by means of a tool.

3. Licence plate holder according to claim 2, wherein each one of said lugs of the lateral holding members (20) projets, in its inclined position, from a recess (30) provided in the support frame (12).

4. Licence plate holder according to claim 3, wherein those holding members (20) to be used for small licence plates (28) and covered by a broad licence plate (28) will be pressed by said broad licence plate (28) into the corresponding recesses (30) of the support frame (12).

5. Licence plate holder according to any of the preceding claims, wherein a plurality of holding members (20) laterally retaining the licence plates (28) is provided such that licence plates (28) of different widths will be retained on either side, preferably twice on the right and the left side.

6. Licence plate holder according to any of the preceding claims, wherein the upper holding members (24) and/or the lower holding members (26) are movable or adjustable such that licence plates (28) of different heights may be retained.

7. Licence plate holder according to claim 6, wherein the upper holding members (24) are movable, e.g. in the form of sliders adjustably guided in the support frame (12).

8. Licence plate holder according to claim 6 or 7, wherein the lower holding members (26) are fixed elements, e.g. in the form of lugs.

9. Licence plate holder according to any of the preceding claims, wherein one or more, preferably two plate illuminating elements (14) are integrated in the support frame (12), preferably within already existing windows.

10. Licence plate holder according to claim 9, wherein said plate illuminating elements (14) are LED lamps.

11. Licence plate holder according to any of the preceding claims, wherein optionally a stop light (16) is integrated in the support frame (12), preferably within an already existing window.

12. Licence plate holder according to any of claims 9 to 11, wherein in all embodiments only one cable (18) is required for the supply of all lamps.

## Revendications

1. Support de plaque d'immatriculation comprenant un boîtier (12) pour recevoir une plaque d'immatriculation (28) et muni d'un ou plusieurs moyens d'attache inférieurs (26) et/ou d'un ou plusieurs moyens d'attache supérieurs (24) pour retenir préférentiellement les deux côtés supérieur et inférieur des plaques d'immatriculation (28) de différentes hauteurs, **caractérisé par le fait que** le boîtier (12) est muni d'au moins deux moyens d'attache (20) pour la fixation latérale des plaques d'immatriculation (28) de différentes longueurs.

2. Support selon la revendication 1, **caractérisé par le fait que** les moyens d'attache (20) pour la fixation latérale de la plaque d'immatriculation (28) sont en forme d'ergots (28) lesquels sont réalisés de préférence en matière plastique, comme l'ensemble du boîtier, par l'action d'un outil placé en biais.

3. Support selon la revendication 2, **caractérisé par le fait que** chaque ergot des moyens d'attache latérale (20) est positionné en saillie au dessus d'un évidement (30) du boîtier (12).

4. Support selon la revendication 3, **caractérisé par le fait que** les moyens d'attache latérale (20) prévus pour les plaques d'immatriculation courtes (28) et se trouvant au-dessous d'une plaque d'immatriculation longue (28) sont enfoncés dans les évidements (30) correspondants du boîtier par ladite plaque d'immatriculation longue (28).

5. Support selon une des revendications précédentes, **caractérisé par le fait que** les moyens d'attache (20) pour la fixation latérale des plaques d'immatriculation (28) sont en nombre suffisant pour maintenir de façon multiple, de préférence double, à droite comme à gauche, des plaques d'immatriculation (28) de différentes longueurs.

6. Support selon une des revendications précédentes, **caractérisé par le fait que** les moyens d'attache supérieurs (24) et /ou les moyen d'attache inférieurs (26) sont aptes à être déplacés ou réglables de façon à maintenir des plaques d'immatriculations (28) de différentes hauteurs.

7. Support selon la revendication 6, **caractérisé par le fait que** les moyens d'attache supérieurs (24) sont mobiles, par exemple en forme de verrous, montés réglables dans le boîtier (12).

8. Support selon la revendication 6 ou 7, **caractérisé par le fait que** les moyens d'attache inférieurs (26) sont fixes, par exemple en forme d'ergots.

9. Support selon une des revendications précédentes, **caractérisé par le fait qu'**une ou plusieurs, de préférence deux, moyens d'éclairage (14) de la plaque d'immatriculation sont intégrés dans le boîtier (12), de préférence dans des logements existants.

10. Support selon la revendication 9, **caractérisé par le fait que** les moyens d'éclairage (14) de la plaque d'immatriculation sont réalisés par des lampes DEL.

11. Support selon une des revendications précédentes, **caractérisé par le fait qu'**en option un feu de stop (16) est intégré dans le boîtier (12), de préférence dans un logement existant.

12. Support selon une des revendications 9 à 11, **caractérisé par le fait que** dans tous les modèles un seul câble (18) est nécessaire pour l'alimentation des lampes.
